# EUROPÄISCHE PATENTSCHRIFT

(11) **EP 2 077 957 B1**
(45) Veröffentlichungstag und Bekanntmachung des Hinweises auf die Patenterteilung: **20.10.2010**
(21) Anmeldenummer: 07818597.2
(22) Anmeldetag: 29.09.2007
(51) Int. Cl.: B60R 22/36

(54) **SICHERHEITSGURTAUFROLLER MIT EINER IN VERSCHIEDENEN FUNKTIONSSTELLUNGEN UNTERSCHIEDLICHEN LASTÜBERTRAGUNG**
SAFETY BELT RETRACTOR WITH VARIABLE LOAD TRANSFER IN DIFFERENT FUNCTION SETTINGS
ENROULEUR DE CEINTURE DE SÉCURITÉ AYANT UN TRANSFERT DE CHARGE DIFFÉRENT DANS DIVERSES POSITIONS FONCTIONNELLES

(30) Priorität: 14.10.2006 DE 102006048673
(43) Veröffentlichungstag der Anmeldung: 15.07.2009
(73) Patentinhaber: Autoliv Development AB, 447 83 Vårgårda (SE)
(72) Erfinder: TONN, Michael, 23816 Leezen (DE); CARSTENS, Volker, 25597 Westermoor (DE); KRÖGER, Doris, 25436 Tornesch (DE); BUTENOP, Klaus, 25379 Herzhorn (DE)
(74) Vertreter: Müller, Karl-Ernst
(86) Internationale Anmeldenummer: PCT/EP2007/008517
(87) Internationale Veröffentlichungsnummer: WO 2008/043447

(56) Entgegenhaltungen:
- EP-A- 0 156 337
- DE-A1- 10 357 812
- DE-U1- 29 719 143

## Beschreibung

Die Erfindung betrifft einen selbstsperrenden Sicherheitsgurtaufroller mit einer gurtbandsensitiv und/oder fahrzeugsensitiv ansteuerbaren Blockiereinrichtung für eine in den Gehäuseschenkeln eines U-förmigen Gehäuses drehbar gelagerte Gurtwelle, wobei die Blockiereinrichtung eine in einer Ausnehmung der Wellenstirn der Gurtwelle eingelegte und radial ausschwenkbar bis zum Eingriff in eine an dem zugeordneten Gehäuseschenkel ausgebildete Blockierverzahnung gelagerte Sperrklinke umfasst, wobei sich die Sperrklinke in ihrer ausgeschwenkten Stellung mit zwei Anschlagflächen an zugeordneten Kraftübertragungsflächen der Ausnehmung in der Wellenstirn abstützt und in unterschiedlich großen Lastfällen ein durch Materialverformung herbeigeführter abgestufter Zahneingriff zwischen den Zähnen der Sperrklinke und der Blockierverzahnung ausgebildet ist.

Ein selbstsperrender Sicherheitsgurtaufroller der vorgenannten Art ist in der EP 0 156 337 A2 beschrieben. Soweit in den Gehäuseschenkeln des U-förmigen Gurtaufrollergehäuses jeweils eine im wesentlichen kreisförmige Durchtrittsöffnung für eine in den Gehäuseschenkeln gelagerte Gurtwelle ausgebildet ist, weist eine der beiden Durchtrittsöffnungen eine rundum verlaufende Innenverzahnung als Blockierverzahnung auf. Die dieser Durchtrittsöffnung zugeordnete Wellenstirn der Gurtwelle ist zur versenkten beziehungsweise eingebetteten Aufnahme sowie zur schwenkbeweglichen Lagerung einer Sperrklinke ausgebildet. Hierzu ist die Sperrklinke nach Art eines Pendels in Form eines umgekehrten "T" mit einer am freien Ende des aufrechten T-Balkens ausgebildeten Verdickung ausgebildet, die in einer in der Vertiefung der Wellenstirn eingeformten Taillengestaltung lagert, so dass hierdurch die Drehachse für die Sperrklinke ausgebildet ist. Die Sperrklinke wird weiterhin in einem Langloch von einem an der Stirnseite der Gurtwelle ausgebildeten Lagerzapfen durchsetzt, wodurch eine Führung der Sperrklinke bei deren radialer Schwenkbewegung herbeigeführt ist.

Aufgrund der T-Form der Sperrklinke ergeben sich an den die T-förmige Sperrklinke umschließenden Wänden der Ausnehmung in der Wellenstirn mehrere Kraftübertragungsflächen, an denen die Sperrklinke in verschiedenen Funktionsstellungen mit zugeordneten Anschlagflächen in Anlage kommt. Aufgrund der Ausbildung der Zähne von Blockierverzahnung und Sperrklinke einerseits und der Zuordnung der Zahneingriffsflächen zu der Lagerung der Sperrklinke sowie zu den Kraftübertragungsflächen andererseits ist im Lastfall eine Kraftübertragung in Umfangsrichtung gegeben. Dabei ist vorgesehen, dass diejenige Kraftübertragungsfläche der Wellenstirn, gegen die sich die zugeordnete Anschlagfläche der Sperrklinke bei Zahneingriff als Widerlager anlegt, nachgiebig, beispielsweise mit unter Last zerquetschbaren Werkstoffspitzen, ausgebildet ist. Hierdurch wird erreicht, dass die Blockiereinrichtung im täglichen Normalbetrieb mit jeweils unter Normallast in Eingriff kommenden Verzahnungen von Gurtaufrollergehäuse und Sperrklinke nicht beeinträchtigt wird, während im Crash-Fall bei entsprechend hoher Last die nachgiebige Kraftübertragungsfläche verformt wird und so die Sperrklinke aufgrund einer weiteren radialen Auslenkung mit ihrer Verzahnung noch tiefer in Eingriff mit der Blockierverzahnung gelangt.

Mit dem bekannten Gurtaufroller ist der Nachteil verbunden, dass aufgrund der jeweils in Umfangsrichtung erfolgenden Krafteinleitung insbesondere an der gehäusefesten Blockierverzahnung eine hohe Zahnfußfestigkeit gegeben sein muss, um ein Abscheren der von der Sperrklinke in Eingriff genommenen Zähne zu vermeiden. Hieraus folgt zwangsläufig eine relativ grobe Zahnteilung, die unerwünscht lange Ver- beziehungsweise Entriegelungswege für die Sperrklinke zur Folge hat. Ebenso ist eine hohe Materialgüte für die Ausbildung der Blockierverzahnung erforderlich.

Der Erfindung liegt daher die Aufgabe zugrunde, einen selbstsperrenden Sicherheitsgurtaufroller mit den gattungsgemäßen Merkmalen so auszulegen, dass bei kurzen Ver- und Entriegelungswegen der Herstellungsaufwand insbesondere für die Blockiereinrichtung reduziert ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass die Blockierverzahnung einerseits und die Anschlagflächen der Sperrklinke sowie die Kraftübertragungsflächen der Ausnehmung der Wellenstirn andererseits derart zueinander ausgerichtet sind, dass bei Zahneingriff der Sperrklinke in die Blockierverzahnung unter Normallast eine Kraftübertragung zwischen der Blockierverzahnung und der Gurtwelle in einer radialen Belastungsrichtung erfolgt, und dass bei im Crash-Fall ansteigender Last die zusätzlich auftretende Last aufgrund plastischer Verformung wenigstens eines in Eingriff genommenen Gehäusezahns der Blockierverzahnung als in Umfangsrichtung wirksame Kraft übertragen wird. Dabei ist es zweckmäßig, die Aufteilung der Kraftübertragung so auszulegen, dass die im Normalbetrieb des Gurtaufrollers auftretende Last von etwa bis zu 5 kN ausschließlich in der radialen Belastungsrichtung übertragen wird, während im Crash-Fall das maximale, aufgrund der an der Gurtwelle wirkenden Gurtbelastung auftretende Drehmoment und die daraus resultierende Last mit etwa ²/₃ durch Radialkraftaufnahme und mit etwa ¹/₃ durch die zusätzlich in Wirkung gelangende Umfangskraftaufnahme übertragen beziehungsweise abgebaut wird.

Mit der erfindungsgemäßen Auslegung ist der Vorteil verbunden, dass trotz im Crashfall auftretender hoher Gurtlast die Verwendung einer relativ feinen Verzahnung mit einer geringeren Zahntiefe ermöglicht ist, so dass kurze Ver- und Entriegelungswege bei der Aussteuerung beziehungsweise Rücksteuerung der Sperrklinke gegeben sind. Dabei kann der konstruktive Querschnitt zwischen der Außenkante des Gurtaufrollergehäuses und dem Verzahnungsdurchmesser geringer gehalten werden, und es kann ferner eine minder hochwertige und damit preiswertere Materialgüte für die Auslegung der Blockierverzahnung eingesetzt werden.

Nach einem Ausführungsbeispiel der Erfindung ist vorgesehen, dass die quer zur Umfangsrichtung verlaufenden Zahnflanken der Blockierverzahnung bei Überschreiten einer auf sie einwirkenden Belastung verformbar ausgebildet sind.

Hinsichtlich der Konfiguration der Blockierverzahnung kann vorgesehen sein, dass die jeweils einen Gehäüsezahn der Blockierverzahnung ausbildenden Zahnflanken miteinander einen Winkel von > 90° einschließen.

Nach einem Ausführungsbeispiel der Erfindung ist vorgesehen, dass die die Sperrklinke aufnehmende Ausnehmung in der Wellenstirn eine erste Kraftübertragungsfläche für die Kraftübertragung in radialer Richtung und eine zweite Kraftübertragungsfläche für die Kraftübertragung in Umfangsrichtung aufweist, wobei die zweite Kraftübertragungsfläche während der unter Normallast erfolgenden radialen Kraftübertragung nicht an der zugeordneten Anschlagfläche der Sperrklinke anliegt.

Hierbei kann in einer ersten Ausführungsform der Erfindung vorgesehen sein, dass die erste Kraftübertragungsfläche als eine die in der Sperrklinke zur Aufnahme eines an der Gurtwelle angeordneten Lagerzapfens ausgebildete Lageröffnung umschließende Fläche angeordnet ist und bei in Eingriff mit der Blockierverzahnung stehender Sperrklinke bezüglich der Drehachse der Sperrklinke radial dem in Umfangsrichtung vorderen Zahn der Sperrklinke gegenüberliegt. Entsprechend kann bei diesem Ausführungsbeispiel vorgesehen sein, dass die zweite Kraftübertragungsfläche radial bis zum äußeren Umfang der Wellenstirn verläuft und bei in Eingriff mit der Blockierverzahnung stehender Sperrklinke der lasteinleitenden Zahnflanke des in Umfangsrichtung vorderen Gehäusezahns in Umfangsrichtung gegenüberliegt derart, dass der die Zähne tragende Bereich der Sperrklinke zwischen der Zahnflanke und der zweiten Kraftübertragungsfläche gelegen ist, wobei in einer zweckmäßigen Ausführungsform vorgesehen sein kann, dass die zweite Kraftübertragungsfläche an einer in Umfangsrichtung in eine formentsprechende Einbuchtung der Sperrklinke vorspringenden Nase ausgebildet ist.

Nach einem Ausführungsbeispiel der Erfindung ist vorgesehen, dass der Lagerzapfen an seinem äußeren durch die Lageröffnung der Sperrklinke hindurchragenden Ende bei aufgesetzter Sperrklinke derart verformt ist, dass die Sperrklinke auf dem Lagerzapfen drehbar und gleichzeitig gegen axiale Verschiebung gesichert ist. Hiermit ist der Vorteil verbunden, dass nach dem Aufsetzen der Sperrklinke auf den Lagerzapfen der Gurtwelle und dessen endseitiger Verformung eine unverlierbare Baugruppe geschaffen ist. Somit ist es möglich, diese aus dem Wellenkörper, der Gurtwelle und der Sperrklinke bestehende Baugruppe unabhängig von weiteren Baugruppen des Gurtaufrollers herzustellen und vorzumontieren, also auch bei unterschiedlichen Herstellern oder an unterschiedlichen Standorten. Die axiale Sicherung der Sperrklinke auf dem Lagerzapfen verhindert zudem ein Ausbrechen der Sperrklinke unter Last und stellt eine formschlüssige Überdeckung zwischen dem Wellenkörper der Gurtwelle, der Sperrklinke und der gehäuseseitigen Blockierverzahnung in allen Betriebszuständen des Sicherheitsgurtaufrollers sicher.

Nach einem Ausführungsbeispiel der Erfindung ist vorgesehen, dass das Ende des Lagerzapfens in einem Taumelnietprozess zu einem Nietkopf verformt ist.

Wie aus der gattungsbildenden EP 0 156 337 A2 grundsätzlich bekannt, kann nach einem Ausführungsbeispiel der Erfindung vorgesehen sein, dass die Gurtwelle an ihrer Stirnseite eine Vertiefung zur bündigen Aufnahme der Sperrklinke an der Wellenstirn aufweist, wobei erfindungsgemäß auch das verformte Ende des Lagerzapfens von der Vertiefung aufgenommen ist, so dass sich ein bündiger Abschluss der Sperrklinke einschließlich des verformten Endes der Lagerzapfen bezüglich der Wellenstirn ergibt.

Nach einem Ausführungsbeispiel der Erfindung ist vorgesehen, dass der Wellenkörper der Gurtwelle einschließlich des Lagerzapfens als Gußteil ausgebildet ist; hiermit wird eine sichere Kraftübertragung der auftretenden Blockierkräfte unter Last gewährleistet.

In der Zeichnung ist ein Ausführungsbeispiel der Erfindung wiedergegeben, welches nachstehend beschrieben ist. Es zeigen:
- Fig. 1: einen Draufsicht auf die Blockierseite eines selbstsperrenden Sicherheitsgurtaufrollers mit Gehäuseschenkel, Wellenstirn und Sperrklinke bei in die Blockierverzahnung ausgelenkter Sperrklinke unter Normallast bei Radialkraftaufnahme,
- Fig. 2: den Gegenstand der Figur 1 bei im Crash-Fall auftretender Volllast und zusätzlicher Umfangskraftaufnahme.
- Fig. 3: den Gegenstand der Figur 1 in einem Schnitt nach Linie III - III in Figur 1

Ein einer Blockiereinrichtung des im übrigen nicht in allen Einzelteilen dargestellten selbstsperrenden Sicherheitsgurtaufrollers zugeordneter Gehäuseschenkel 10 weist eine Durchbrechung 11 auf, an der eine rundum verlaufende Blockierverzahnung 12 in Form einer Innenverzahnung ausgebildet ist. Der Wellenkörper der Gurtwelle 13 liegt mit seiner Stirnseite in der Durchbrechung 11, wobei der Wellenkörper an seiner Wellenstirn 14 eine Ausnehmung 15 aufweist, in welcher eine Sperrklinke 16 drehbar gelagert ist. Die Sperrklinke 16 weist an ihrem aus der Kontur der Wellenstirn 14 ausschwenkbaren Ende zwei einzelne Zähne 17 auf, die zum Eingriff in die Blockierverzahnung 12 des Gehäuseschenkels 10 eingerichtet ist, wenn die Sperrklinke 16 sich in ihrer in der Zeichnung dargestellten Blockierlage befindet.

Die Sperrklinke 16 ist mit einer Ausnehmung 19 auf einem wellenseitigen Lagerzapfen 18 gelagert. Zusätzlich weist die Sperrklinke 16 noch eine Bohrung 21 auf, mittels der die Sperrklinke 16 zu ihrer Verschwenkung in den unterschiedlichen Betriebszuständen des Sicherheitsgurtaufrollers durch Eingriff eines nicht dargestellten Steuerzapfens steuerbar ist.

Die Blockierverzahnung 12 besteht aus einer Abfolge von Zähnen 28, die von quer zur Umfangsrichtung verlaufenden Zahnflanken 26 sowie in Umfangsrichtung ausgerichteten Zahnflanken 27 eingeschlossen beziehungsweise gebildet sind. Dabei schließen die Zahnflanken 26, 27 miteinander einen Winkel von größer als 90 Grad ein, so dass sich eine relativ flache beziehungsweise relativ stumpfe Verzahnung ergibt.

An den die Ausnehmung 15 in der Wellenstirn 14 umschließenden Begrenzungswänden ist eine erste Kraftübertragungsfläche 25 ausgebildet, die die in der Sperrklinke 16 zur Aufnahme eines an der Gurtwelle angeordneten Lagerzapfens 18 ausgebildete Lageröffnung 19 formschlüssig umschließt und bei in Eingriff mit der Blockierverzahnung 12 stehender Sperrklinke 16 bezüglich der durch den Lagerzapfen 18 repräsentierten Drehachse der Sperrklinke 16 radial dem in Umfangsrichtung vorderen Zahn 17 der Sperrklinke 16 gegenüberliegt. Zusätzlich ist eine zweite Kraftübertragungsfläche 32 vorgesehen, die an einer in eine an dem Sperrglied 16 ausgebildete Einbuchtung 31 vorspringenden Nase 30 des die Ausnehmung 15 umschließenden Bereichs der Wellenstirn 14 ausgebildet ist. Dabei sind die Nase 30 und die Einbuchtung 31 so ausgerichtet, dass sich die radial bis zum äußeren Umfang der Wellenstirn 14 erstreckende zweite Kraftübertragungsfläche 32 quer zur Umfangsrichtung erstreckt und dadurch bei in Eingriff mit der Blockierverzahnung 12 stehender Sperrklinke 16 der lasteinleitenden Zahnflanke 26 des in Umfangsrichtung vorderen, von dem Sperrglied in Eingriff genommenen Zahns 28 gegenüberliegt derart, dass der die Zähne 17 tragende Bereich der Sperrklinke 16 zwischen der Zahnflanke 26 der Blockierverzahnung 12 und der zweiten Kraftübertragungsfläche 32 gelegen ist.

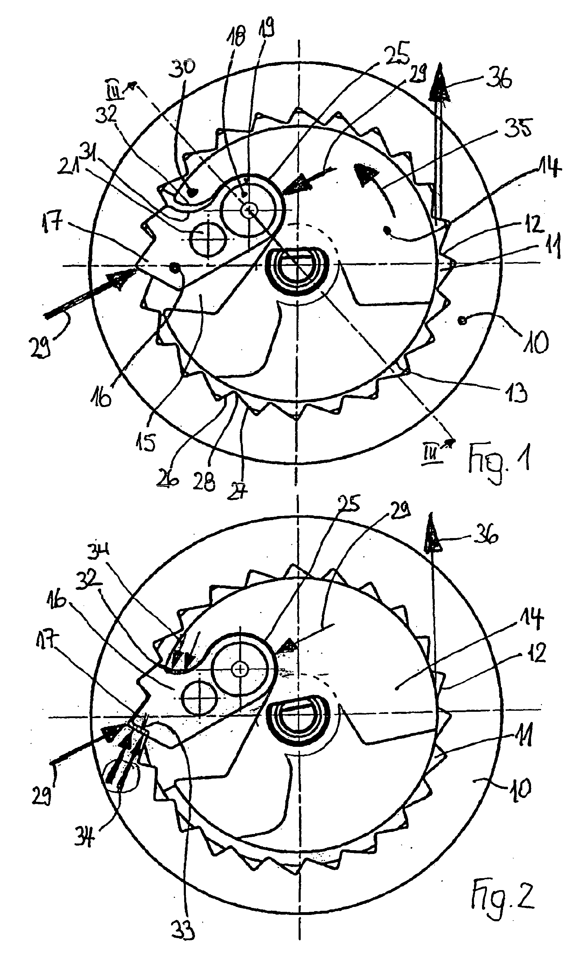

Wie sich zunächst aus Figur 1 ergibt, führt der in Gurtauszugsrichtung gemäß Pfeil 36 wirkende Gurtzug zu einer Drehung der Gurtwelle 13 in Richtung des Pfeils 35, und unter entsprechenden Steuerbedingungen erfolgt eine radiale Auslenkung des Sperrgliedes 16 derart, dass die beiden Zähne 17 der Sperrklinke 16 in die Blockierverzahnung 12 des Gehäuseschenkels 10 eingreifen. Geschieht dieser Zahneingriff unter Normallast, also etwa bis zu einer Last von 5 kN, so gelangt die zweite Kraftübertragungsfläche 32 an der Nase 30 nicht in Anlage an der an der Einbuchtung 31 ausgebildete Anschlagfläche der Sperrklinke 16, so dass aufgrund der Abstützung der Zähne 17 der Sperrklinke 16 an den Zahnflanken 26 und 27 der Blockierverzahnung 12 es ausschließlich zu einer radialen Kraftübertragung entsprechend Pfeilen 29 kommt.

Erfolgt gemäß Figur 2 im Crashfall eine größere Belastung der Gurtwelle 13 in Richtung des Pfeils 36, so gräbt sich der in Umfangsrichtung gelegene vordere Zahn 17 der Sperrklinke 16 in die in Eingriff genommene Zahnflanke 26 der Blockierverzahnung 12 ein, die in einem mit 33 angedeuteten Verformungsbereich nachgibt. Aufgrund dieses tieferen Zahneingriffs gelangt nun die Nase 30 mit der zweiten Kraftübertragungsfläche 32 in Anlage an der Einbuchtung 31, so dass über diese Gestaltung nunmehr auch in Umfangsrichtung gemäß Pfeilen 34 zusätzlich eine Kraftübertragung erfolgt. Somit wird unter Volllast die aufzunehmende Kraft sowohl in einer radialen Belastungsrichtung als auch in einer Umfangsrichtung von der Sperrklinke 16 in die Blockierverzahnung 12 des Gehäuseschenkels 10 abgeleitet.

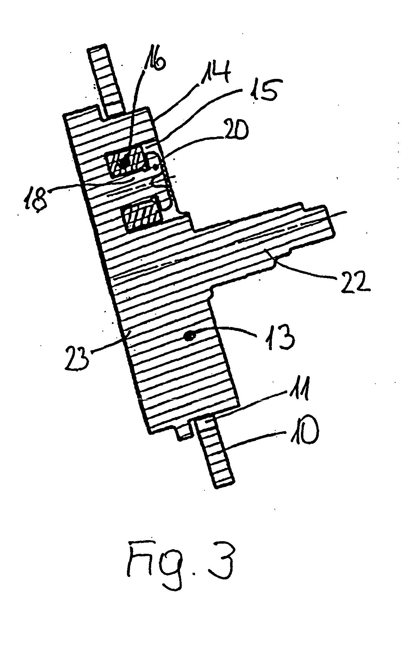

Wie sich schließlich insbesondere aus Figur 3 ergibt, ist das freie Ende des Lagerzapfens 18 bei aufgesetzter Sperrklinke 16 beispielsweise durch einen Taumelnietprozess in einen Nietkopf 20 verformt, der die Sperrklinke 16 außen übergreift und so für eine axiale Festlegung und Sicherung der Sperrklinke 16 auf dem Lagerzapfen 18 sorgt. Dabei ist die Materialstärke der Sperrklinke 16 geringer bemessen als die Tiefe der die Sperrklinke 16 aufnehmenden Vertiefung 15 derart, dass der Nietkopf 20 des Lagerzapfens 18 ebenfalls bündig von der Vertiefung 15 des Wellenkörpers 23 aufgenommen ist

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Selbstsperrender Sicherheitsgurtaufroller mit einer gurtbandsensitiv und/oder fahrzeugsensitiv ansteuerbaren Blockiereinrichtung für eine in den Gehäuseschenkeln eines U-förmigen Gehäuses drehbar gelagerte Gurtwelle (13), wobei die Blockiereinrichtung eine in einer Ausnehmung (15) der Wellenstirn (14) der Gurtwelle (13) eingelegte und radial ausschwenkbar bis zum Eingriff in eine an dem zugeordneten Gehäuseschenkel (10) ausgebildete Blockierverzahnung (12) gelagerte Sperrklinke (16) umfasst, wobei sich die Sperrklinke (16) in ihrer ausgeschwenkten Stellung mit zwei Anschlagflächen an zugeordneten Kraftübertragungsflächen (25, 32) der Ausnehmung (15) in der Wellenstirn (14) abstützt und in unterschiedlich großen Lastfällen ein durch Materialverformung herbeigeführter abgestufter Zahneingriff zwischen den Zähnen (17) der Sperrklinke (16) und der Blockierverzahnung (12) ausgebildet ist, **dadurch gekennzeichnet, dass** die Blockierverzahnung (12) einerseits und die Anschlagflächen der Sperrklinke (16) sowie die Kraftübertragungsflächen (25, 32) der Ausnehmung (15) der Wellenstirn (14) andererseits derart zueinander ausgerichtet sind, dass bei Zahneingriff der Sperrklinke (16) in die Blockierverzahnung (12) unter Normallast eine Kraftübertragung zwischen der Blockierverzahnung (12) und der Gurtwelle (13) in einer radialen Belastungsrichtung erfolgt, und dass bei im Crash-Fall ansteigender Last die zusätzlich auftretende Last aufgrund plastischer Verformung wenigstens eines in Eingriff genommenen Gehäusezahns (28, 26) der Blockierverzahnung (12) als in Umfangsrichtung wirksame Kraft übertragen wird.

2. Selbstsperrender Sicherheitsgurtaufroller nach Anspruch 1, **dadurch gekennzeichnet, dass** die quer zur Umfangsrichtung verlaufenden Zahnflanken (26) der Blockierverzahnung (11) bei Überschreiten einer auf sie einwirkenden Belastung verformbar ausgebildet sind.

3. Selbstsperrender Sicherheitsgurtaufroller nach Anspruch 1 oder 2, **dadurch gekennzeichnet, dass** die jeweils einen Gehäusezahn (28) der Blockierverzahnung (12) ausbildenden Zahnflanken (26, 27) miteinander einen Winkel von > 90° einschließen.

4. Selbstsperrender Sicherheitsgurtaufroller nach einem der Ansprüche 1 bis 3, **dadurch gekennzeichnet, dass** die die Sperrklinke (16) aufnehmende Ausnehmung (15) in der Wellenstirn (14) eine erste Kraftübertragungsfläche (25) für die Kraftübertragung in radialer Richtung und eine zweite Kraftübertragungsfläche (32) für die Kraftübertragung in Umfangsrichtung aufweist, wobei die zweite Kraftübertragungsfläche während der unter Normallast erfolgenden radialen Kraftübertragung nicht an der zugeordneten Anschlagfläche der Sperrklinke (16) anliegt.

5. Selbstsperrender Sicherheitsgurtaufroller nach Anspruch 4, **dadurch gekennzeichnet, dass** die erste Kraftübertragungsfläche (25) als eine die in der Sperrklinke (16) zur Aufnahme eines an der Gurtwelle angeordneten Lagerzapfens (18) ausgebildete Lageröffnung (19) umschließende Fläche angeordnet ist und bei in Eingriff mit der Blockierverzahnung (12) stehender Sperrklinke bezüglich der Drehachse der Sperrklinke (16) radial dem in Umfangsrichtung vorderen Zahn (17) der Sperrklinke (16) gegenüberliegt.

6. Selbstsperrender Sicherheitsgurtaufroller nach Anspruch 4 oder 5, **dadurch gekennzeichnet, dass** die zweite Kraftübertragungsfläche (32) radial bis zum äußeren Umfang der Wellenstirn (14) verläuft und bei in Eingriff mit der Blockierverzahnung (12) stehender Sperrklinke (16) der lasteinleitenden Zahnflanke (26) des in Umfangsrichtung vorderen Gehäusezahns (28) in Umfangsrichtung gegenüberliegt derart, dass der die Zähne (17) tragende Bereich der Sperrklinke (16) zwischen der Zahnflanke (26) und der zweiten Kraftübertragungsfläche (32) gelegen ist.

7. Selbstsperrender Sicherheitsgurtaufroller nach einem der Ansprüche 1 bis 6, **dadurch gekennzeichnet, dass** die zweite Kraftübertragungsfläche (32) an einer in Umfangsrichtung in eine formentsprechende Einbuchtung (31) der Sperrklinke (16) vorspringenden Nase (30) ausgebildet ist.

8. Selbstsperrender Sicherheitsgurtaufroller nach einem der Ansprüche 1 bis 7, **dadurch gekennzeichnet, dass** der Lagerzapfen (18) an seinem äußeren durch die Lageröffnung (19) der Sperrklinke (16) hindurchragenden Ende bei aufgesetzter Sperrklinke (16) derart verformt ist, dass die Sperrklinke (16) auf dem Lagerzapfen (18) drehbar und gleichzeitig gegen axiale Verschiebung gesichert ist.

9. Selbstsperrender Sicherheitsgurtaufroller nach Anspruch 8, **dadurch gekennzeichnet, dass** das Ende des Lagerzapfens (18) in einem Taumelnietprozess zu einem Nietkopf (20) verformt ist.

10. Selbstsperrender Sicherheitsgurtaufroller nach Anspruch 8 oder 9, **dadurch gekennzeichnet, dass** die Gurtwelle an ihrer Wellenstirn (14) eine Vertiefung (15) zur bündigen Aufnahme der Sperrklinke (16) einschließlich des verformten Endes des Lagerzapfens (18) in der Wellenstirn aufweist.

11. Selbstsperrender Sicherheitsgurtaufroller nach einem der Ansprüche der Ansprüche 8 bis 10, **dadurch gekennzeichnet, dass** der Wellenkörper (23) der Gurtwelle (13) einschließlich des Lagerzapfens (18) als Gußteil ausgebildet ist.

## Claims

1. Self-locking seat belt retractor with a blocking device, which can be activated in a belt-strap-sensitive and/or vehicle-sensitive manner, for a belt shaft (13) mounted rotatably in the housing limbs of a U-shaped housing, the blocking device comprising a locking pawl (16) which is placed in a recess (15) of the shaft front (14) of the belt shaft (13) and is mounted such that it can pivot out radially until it engages in a blocking toothing (12) formed on the associated housing limb (10), the locking pawl (16), in its pivoted-out position, being supported in the shaft front (14) by means of two stop surfaces on associated force transmission surfaces (25,32) of the recess (15) and, in loading situations of differing magnitude, a stepped toothed engagement, which is brought about by means of material deformation, being formed between the teeth (17) of the locking pawl (16) and the blocking toothing (12), **characterized in that** the blocking toothing (12), on the one hand, and the stop surfaces of the locking pawl (16) and the force transmission surfaces (25, 32) of the recess (15) of the shaft front (14), on the other hand, are oriented with respect to one another in such a manner that, when there is a toothed engagement of the locking pawl (16) in the blocking toothing (12) under normal load, a transmission of force between the blocking toothing (12) and the belt shaft (13) takes place in a radial loading direction, and **in that**, in the case of an increasing load in the event of a crash, the additionally occurring load is transmitted as a force which is effective in the circumferential direction on account of plastic deformation of at least one housing tooth (28, 26), which has been set into engagement, of the blocking toothing (12).

2. Self-locking seat belt retractor according to claim 1, **characterized in that** the tooth flanks (26) of the blocking toothing (11), which tooth flanks run transversely with respect to the circumferential direction, are designed such that they can be deformed if a load acting on them is exceeded.

3. Self-locking seat belt retractor according to claim 1 or 2, **characterized in that** the tooth flanks (26, 27) forming a respective housing tooth (28) of the blocking toothing (12) enclose an angle of > 90° with each other.

4. Self-locking seat belt retractor according to one of claims 1 to 3, **characterized in that** the recess (15), which receives the locking pawl (16), in the shaft front (14) has a first force transmission surface (25) for the transmission of force in the radial direction and a second force transmission surface (32) for the transmission of force in the circumferential direction, the second force transmission surface not bearing against the associated stop surface of the locking pawl (16) during the radial transmission of force which takes place under normal load.

5. Self-locking seat belt retractor according to claim 4, **characterized in that** the first force transmission surface (25) is arranged as a surface which surrounds the bearing opening (19) formed in the locking pawl (16) in order to receive a bearing journal (18) arranged on the belt shaft, and, when the locking pawl is in engagement with the blocking toothing (12), the said force transmission surface is situated radially, with respect to the axis of rotation of the locking pawl (16), opposite that tooth (17) of the locking pawl (16) which is in front in the circumferential direction.

6. Self-locking seat belt retractor according to claim 4 or 5, **characterized in that** the second force transmission surface (32) runs radially as far as the outer circumference of the shaft front (14), and, when the locking pawl (16) is in engagement with the blocking toothing (12), the said force transmission surface is situated in the circumferential direction opposite the load-introducing tooth flank (26) of the housing tooth (28), which is in front in the circumferential direction, in such a manner that that region of the locking pawl (16) which bears the teeth (17) is placed between the tooth flank (26) and the second force transmission surface (32).

7. Self-locking seat belt retractor according to one of claims 1 to 6, **characterized in that** the second force transmission surface (32) is formed on a lug (30) projecting in the circumferential direction into a correspondingly shaped indentation (31) in the locking pawl (16).

8. Self-locking seat belt retractor according to one of claims 1 to 7, **characterized in that**, when the locking pawl (16) is placed onto it, the bearing journal (18) is deformed at its outer end protruding through the bearing opening (19) of the locking pawl (16) in such a manner that the locking pawl (16) is rotatable on the bearing journal (18) and at the same time is secured against axial displacement.

9. Self-locking seat belt retractor according to claim 8, **characterized in that** the end of the bearing journal (18) is deformed in a wobble riveting process to form a rivet head (20).

10. Self-locking seat belt retractor according to claim 8 or 9, **characterized in that** the belt shaft has, on its shaft front (14), a depression (15) for the mounting of the locking pawl (16) including the deformed end of the bearing journal (18) in the shaft front in a flush manner.

11. Self-locking seat belt retractor according to one of claims 8 to 10, **characterized in that** the shaft body (23) of the belt shaft (13) including the bearing journal (18) is formed as a cast part.

## Revendications

1. Enrouleur autobloquant de ceinture de sécurité, comportant un dispositif de blocage, actionnable en réaction à un mouvement de la sangle et/ou en réaction à un mouvement du véhicule, pour un arbre d'enroulement (13) monté rotatif dans les branches d'un boîtier en forme de U, le dispositif de blocage comportant un cliquet d'arrêt (16), inséré dans un évidement (15) de la face frontale (14) de l'arbre d'enroulement (13) et monté de manière à pouvoir pivoter radialement jusqu'à venir en prise dans une denture de blocage (12) réalisée sur la branche (10) associée du boîtier, sachant que, dans sa position pivotée vers l'extérieur, ledit cliquet d'arrêt (16) prend appui avec des surfaces de butée sur des surfaces de transmission de force (25, 32) associées de l'évidement (15) dans la face frontale (14) de l'arbre d'enroulement et, dans des cas de charge d'importance différente, il se forme un engrènement gradué, dû à la déformation du matériau, entre les dents (17) du cliquet d'arrêt (16) et la denture de blocage (12), **caractérisé en ce que** la denture de blocage (12), d'une part, et les surfaces de butée du cliquet d'arrêt (16), ainsi que les surfaces de transmission de force (25, 32) de l'évidement (15) dans la face frontale (14) de l'arbre d'enroulement, d'autre part, sont orientées entre elles de telle sorte que lors d'un engrènement du cliquet d'arrêt (16) dans la denture de blocage (12) sous l'effet d'une charge normale, il se produit une transmission de force entre la denture de blocage (12) et l'arbre d'enroulement (13) dans une direction de sollicitation radiale, et **en ce que**, en présence d'une augmentation de la charge dans le cas d'une collision, la charge produite en plus, en raison d'une déformation plastique d'au moins une dent (28, 26) engrenée de la denture de blocage (12), est transmise en tant que force active dans la direction circonférentielle.

2. Enrouleur autobloquant de ceinture de sécurité selon la revendication 1, **caractérisé en ce que** les flancs (26) des dents de la denture de blocage (11), orientés transversalement à la direction circonférentielle, sont réalisés de manière à pouvoir se déformer en cas de dépassement d'une sollicitation exercée sur lesdits flancs.

3. Enrouleur autobloquant de ceinture de sécurité selon la revendication 1 ou 2, **caractérisé en ce que** les flancs (26, 27), formant respectivement une dent (28) de la denture de blocage (12), forment entre eux un angle supérieur à 90°.

4. Enrouleur autobloquant de ceinture de sécurité selon l'une quelconque des revendications 1 à 3, **caractérisé en ce que** l'évidement (15), recevant le cliquet d'arrêt (16), dans la face frontale (14) de l'arbre d'enroulement comporte une première surface de transmission de force (25) pour la transmission de la force dans la direction radiale et une deuxième surface de transmission de force (32) pour la transmission de la force dans la direction circonférentielle, sachant que pendant la transmission de force radiale, se produisant sous une charge normale, la deuxième surface de transmission de force n'est pas en appui contre la surface de butée associée du cliquet d'arrêt (16).

5. Enrouleur autobloquant de ceinture de sécurité selon la revendication 4, **caractérisé en ce que** la première surface de transmission de force (25) est agencée comme une surface entourant une ouverture de palier (19), réalisée dans le cliquet d'arrêt (16) pour recevoir un tourillon (18) agencé sur l'arbre d'enroulement, et, lorsque le cliquet d'arrêt engrène avec la denture de blocage (12), elle est située, radialement par rapport à l'axe de rotation du cliquet d'arrêt (16), en regard de la dent (17) avant, par référence à la direction circonférentielle, du cliquet d'arrêt (16).

6. Enrouleur autobloquant de ceinture de sécurité selon la revendication 4 ou 5, **caractérisé en ce que** la deuxième surface de transmission de force (32) s'étend radialement jusqu'à la périphérie extérieure de la face frontale (14) de l'arbre d'enroulement et, lorsque le cliquet d'arrêt (16) engrène avec la denture de blocage (12), elle est située dans la direction circonférentielle en regard du flanc (26), introduisant la charge, de la dent avant (28), par référence à la direction circonférentielle, de telle sorte que la zone du cliquet d'arrêt (16) portant les dents (17) est située entre le flanc de dent (26) et la deuxième surface de transmission de force (32).

7. Enrouleur autobloquant de ceinture de sécurité selon l'une quelconque des revendications 1 à 6, **caractérisé en ce que** la deuxième surface de transmission de force (32) est réalisée dans un mentonnet (30) s'engageant en saillie dans la direction circonférentielle dans une échancrure (31) de forme correspondante du cliquet d'arrêt (16).

8. Enrouleur autobloquant de ceinture de sécurité selon l'une quelconque des revendications 1 à 7, **caractérisé en ce que** le tourillon (18), au niveau de son extrémité traversant l'ouverture de palier (19) du cliquet d'arrêt (16) lorsque le cliquet d'arrêt (16) est mis en place, est déformé de telle sorte que le cliquet d'arrêt (16) est monté rotatif sur le tourillon (18) et en même temps immobile en mouvement axial.

9. Enrouleur autobloquant de ceinture de sécurité selon la revendication 8, **caractérisé en ce que** l'extrémité du tourillon (18) est déformée en tête de rivet (20) par un processus de rivetage par fluage.

10. Enrouleur autobloquant de ceinture de sécurité selon la revendication 8 ou 9, **caractérisé en ce que** l'arbre d'enroulement sur sa face frontale (14) comporte un évidement (15) pour recevoir à fleur de la face frontale le cliquet d'arrêt (16), y compris l'extrémité déformée du tourillon (18).

11. Enrouleur autobloquant de ceinture de sécurité selon l'une quelconque des revendications 8 à 10, **caractérisé en ce que** le corps (23) de l'arbre d'enroulement (13), y compris le tourillon (18) sont réalisés sous forme de pièce coulée.
